# EUROPEAN PATENT APPLICATION

(11) **EP 4 684 939 A1**
(43) Date of publication of application: **28.01.2026**
(21) Application number: 25178188.6
(22) Date of filing: 22.05.2025
(51) Int. Cl.: B29C 49/06, B29C 49/42, B29C 49/48, B29C 49/70, B29C 49/02, B29K 67/00, B29L 31/00

(54) **BLOW MOLDING MECHANISM**

(30) Priority: 24.07.2024 JP 2024118870
(71) Applicant: Sumitomo Heavy Industries, Ltd., Tokyo 141-6025 (JP)
(72) Inventor: SHISHIKURA, Masaya, Chiba, 263-0001, (JP); MORISHIGE, Yuuki, Chiba, 263-0001, (JP); TANI, Ryosuke, Chiba, 263-0001, (JP)
(74) Representative: Louis Pöhlau Lohrentz

(57) **Abstract**

Provided is a technique capable of reducing a probability in which a suction circuit (40) is damaged in a blow molding mechanism (1) including the suction circuit (40). The blow molding mechanism (1) molds a final molding product by blowing a gas into an intermediate molding product held by a mold (10). The blow molding mechanism (1) includes the suction circuit (40) that suctions the final molding product to attach the final molding product to the mold (10) and a suppression unit (50) that suppresses a pressure in the suction circuit (40) to a predetermined value or lower.

## Description

### BACKGROUND OF THE INVENTION

### Field of the Invention

The present disclosure relates to a blow molding mechanism.

### Description of Related Art

Japanese Unexamined Patent Publication No. 2022-151468 discloses blow molding. In the blow molding, a gas is blown into an intermediate molding product held by a mold to expand the intermediate molding product into a shape inside the mold, and a final molding product is molded. In the blow molding, a mold that can be divided into a plurality of pieces is used.

### SUMMARY OF THE INVENTION

When the blow molding is completed, a split mold is opened to take out the final molding product. As a method of taking out the final molding product from the opened split mold, there is a method of allowing the final molding product to free-fall. However, when the split mold is opened, a posture of the final molding product becomes unstable, and the final molding product comes into contact with the split mold during the free-fall of the final molding product, so that the final molding product is scratched in some cases.

As a countermeasure, the present inventor examines a method of maintaining a stable posture of the final molding product by suctioning the final molding product with a suction circuit attaching the final molding product to a bottom mold or the like, and then allowing the final molding product to free-fall in this state. In the process of the examination, the present inventor has recognized the following problems.

In a case where a hole is formed in the final molding product due to molding defects or the like, there is a possibility in which a high-pressure gas blown in the blow molding enters the suction circuit through the hole and exceeds a limit of a withstanding pressure of the suction circuit, and the suction circuit is damaged in some cases.

The present disclosure has been devised in view of such a situation, and one exemplary object of an aspect thereof is to provide a technique capable of reducing a probability in which a suction circuit is damaged in a blow molding mechanism including the suction circuit.

According to an aspect of the present disclosure, in order to solve the problem, there is provided a blow molding mechanism that molds a final molding product by blowing a gas into an intermediate molding product held by a mold, the blow molding mechanism including a suction circuit that suctions the final molding product to attach the final molding product to the mold and a suppression unit that suppresses a pressure in the suction circuit to a predetermined value or lower.

Any combination of the components described above and a combination obtained by switching the components and expressions of the present disclosure between methods, devices, systems, and the like are also effective as an aspect of the present disclosure.

According to an aspect of the present disclosure, in the blow molding mechanism including the suction circuit, a probability in which the suction circuit is damaged can be reduced.

### BRIEF DESCRIPTION OF THE DRAWINGS

Fig. 1 is a view schematically showing a configuration of a blow molding mechanism according to an embodiment.
Fig. 2 is a flowchart showing an example of an operation of the blow molding mechanism of Fig. 1.
Figs. 3A and 3B are views showing states of the blow molding mechanism after blow molding is completed.

### DETAILED DESCRIPTION OF THE INVENTION

Hereinafter, the present disclosure will be described with reference to the drawings based on a preferred embodiment. The embodiment does not limit the disclosure and is exemplary, and all the features or combinations thereof described in the embodiment are not necessarily essential to the disclosure. In the embodiment, the same or equivalent components and members will be assigned with the same reference symbols, and redundant description will be omitted as appropriate.

Before specifically describing the embodiment of the present disclosure, an outline of the embodiment will be described. The embodiment relates to a blow molding mechanism. The blow molding mechanism blows a gas into an intermediate molding product held by a mold through a blow circuit to mold a final molding product. The blow molding mechanism maintains a stable posture of the final molding product by suctioning the final molding product with a final molding product suction circuit and attaching the final molding product to a bottom mold or the like, and in this state, the final molding product is allowed to free-fall. Accordingly, generation of a scratch in the final molding product caused by the final molding product coming into contact with a split mold while free-falling is suppressed. Herein, in a case where a hole is formed in the final molding product due to molding defects or the like, the high-pressure gas blown into the blow circuit enters the suction circuit through the hole, and there is a possibility in which a limit of a withstanding pressure of the suction circuit is exceeded and the suction circuit is damaged. Therefore, in the present embodiment, the blow molding mechanism further includes a suppression unit that suppresses a pressure in the suction circuit to a predetermined value or lower. The predetermined value may be, for example, a first threshold pressure to be described later or a second threshold pressure to be described later. Hereinafter, the embodiment will be specifically described.

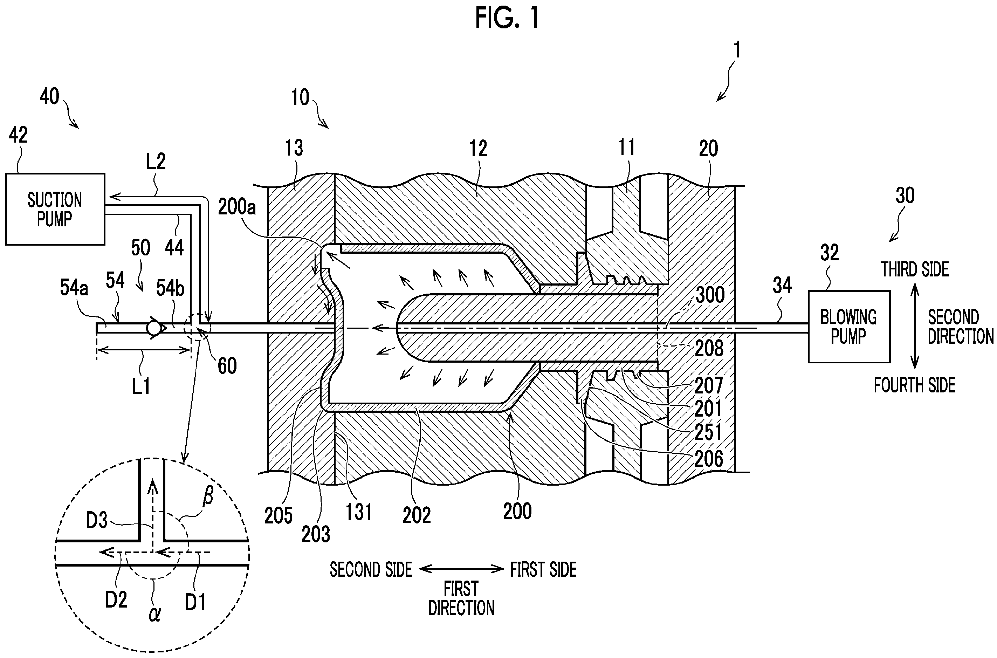

Fig. 1 is a view schematically showing a configuration of a blow molding mechanism 1 according to the embodiment. The blow molding mechanism 1 is applied to an injection blow molding device that performs injection blow molding. The injection blow molding is molding in which injection molding which is molding in a first stage and blow molding which is molding in a second stage are continuously performed. The injection molding is performed in a state where a stationary mold (not shown) and an intermediate mold 20 are closed, and the blow molding is performed in a state where a movable mold 10 and the intermediate mold 20 are closed. The intermediate mold 20 is a so-called rotary mold that is disposed between the stationary mold and the movable mold 10.

In the injection molding, an intermediate molding product (not shown) is molded. In the blow molding, a high-pressure gas (typically, air) is blown into the intermediate molding product held by the movable mold 10 and the intermediate mold 20 to expand the intermediate molding product into a shape inside the movable mold 10, and thus, a final molding product is molded. Hereinafter, a case where the intermediate molding product is a preform and the final molding product is a bottle container 200 will be described as an example.

The blow molding mechanism 1 includes the movable mold 10, the intermediate mold 20, a blow circuit 30, a suction circuit 40, and a suppression unit 50. A horizontal sectional view of the movable mold 10 and the intermediate mold 20 viewed from above is shown. Details of the suppression unit 50 will be described later.

A filled portion of a section of the bottle container 200 indicates a portion where a preform is extended through the blow molding. However, in reality, a portion that is extended through the blow molding and a portion that is not extended are not clearly distinguished from each other. For this reason, a boundary portion between the filled portion and a hatched portion in the section of the bottle container 200 of Fig. 1 merely indicates an approximate position.

The bottle container 200 includes a mouth portion 201, a main body 202, and a bottom portion 203. The mouth portion 201, the main body 202, and the bottom portion 203 are parts of the shape of the bottle container 200 having continuity, and there is no clear boundary. In the present embodiment, the mouth portion 201 is a portion including the vicinity of an end portion of the bottle container 200 on a first side in a first direction of the bottle container 200, that is, a surface 251 on the first side of a flange 206 in the first direction and a male screw 207 screwed into a female screw of a cap (not shown) of the bottle container 200.

The bottom portion 203 is a portion molded by a bottom mold 13 to be described later. Specifically, the bottom portion 203 is a portion in the vicinity of an end portion of the bottle container 200 on a second side in the first direction. The main body 202 is a portion molded by a second split mold 12 to be described later. Specifically, the main body 202 is a portion other than the mouth portion 201 and the bottom portion 203 of the bottle container 200.

In Fig. 1, the movable mold 10 and the intermediate mold 20 are closed. An axial direction (a right-left direction in Fig. 1) of the bottle container 200 in this state is the same direction as a direction in which the intermediate mold 20 and the movable mold 10 are opened and closed. Hereinafter, the direction in which the intermediate mold 20 and the movable mold 10 are opened and closed (the right-left direction in Fig. 1) will be called the "first direction", a right side of the drawing in the first direction will be called the "first side", and a left side of the drawing in the first direction will be called the "second side". In addition, a direction perpendicular to the first direction (an up-down direction in Fig. 1) will be called a "second direction", an upper side of the drawing in the second direction will be called a "third side", and a lower side of the drawing in the second direction will be called a "fourth side".

The movable mold 10 includes a first split mold 11, the second split mold 12, and the bottom mold 13. The first split mold 11 is a split mold that can be opened and closed in the second direction. The first split mold 11 grips the mouth portion 201 in a closed state. In addition, the first split mold 11 is opened to release the mouth portion 201 after the blow molding is completed. The first split mold 11 is also called a split or a mouth split mold.

The second split mold 12 is a split mold that can be opened and closed in the second direction. The second split mold 12 molds the main body 202 in a closed state during the blow molding. In addition, the second split mold 12 is opened to release the main body 202 after the blow molding is completed. The second split mold 12 is also called a blow mold.

The bottom mold 13 molds at least a part of the bottom portion 203 during the blow molding.

The first split mold 11 is slidable with respect to the second split mold 12 in the second direction. The second split mold 12 is slidable with respect to the first split mold 11 and the bottom mold 13 in the second direction.

The blow circuit 30 blows a gas into a preform. The blow circuit 30 includes a blowing pump 32 and a blowing pipe 34. The blowing pump 32 blows a high-pressure gas into the preform via the blowing pipe 34.

The suction circuit 40 suctions the bottle container 200 and attaches the bottle container 200 to the movable mold 10, in this example, the bottom mold 13. The suction circuit 40 includes a suction pump 42 and a suction pipe 44 that communicates with the suction pump 42 and the inside of the movable mold 10. The bottle container 200 is suctioned by the suction pump 42 suctioning a gas in the movable mold 10 via the suction pipe 44, and the bottle container 200 is attached to the bottom mold 13. The suction pump 42 may be a vacuum pump. That is, the suction circuit 40 may be a vacuum circuit.

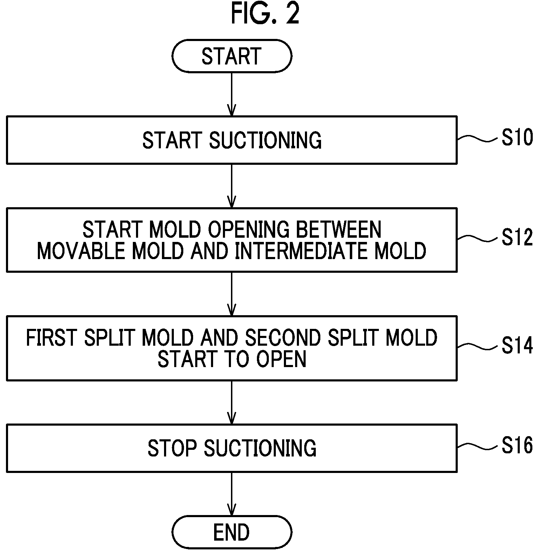

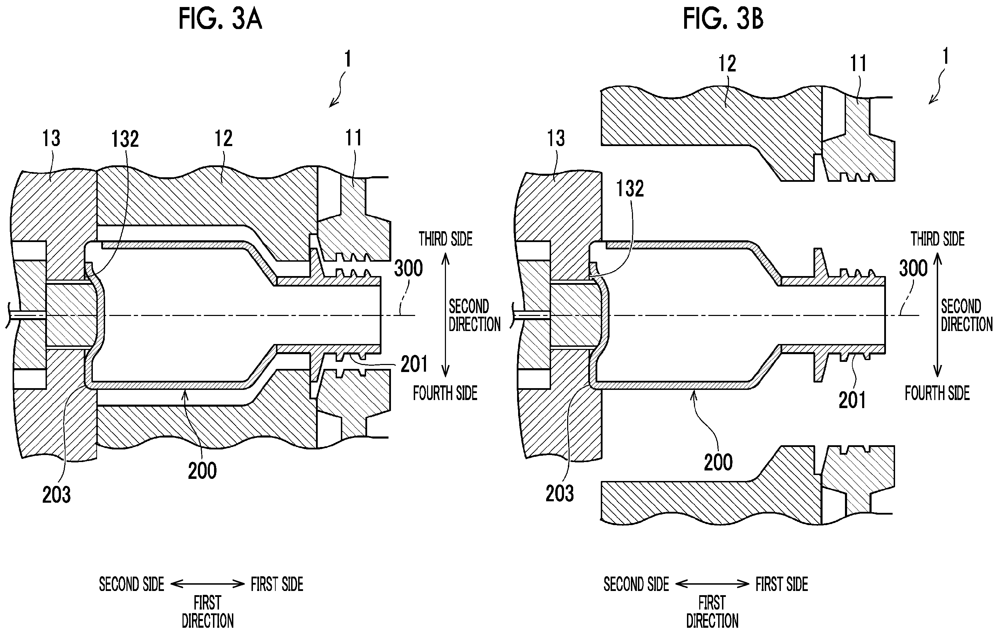

Fig. 2 is a flowchart showing an example of an operation of the blow molding mechanism 1 after the blow molding is completed. Figs. 3A and 3B are views showing states of the blow molding mechanism 1 after the blow molding is completed.

The suction circuit 40 starts suctioning at least a part of the bottom portion 203 of the bottle container 200 (S10). Next, mold opening between the movable mold 10 and the intermediate mold 20 is started (S12). Specifically, the movable mold 10 moves to the second side in the first direction with respect to the intermediate mold 20. The posture of the bottle container 200 at this time point is a state shown in Fig. 1, that is, a state where a center line 300 of the bottle container 200 has not changed.

Next, the first split mold 11 and the second split mold 12 start to open (S14). Fig. 3A shows a state immediately after the first split mold 11 and the second split mold 12 start to open. The first split mold 11 and the second split mold 12 may start to open simultaneously, or the first split mold 11 may start to open immediately after the second split mold 12 starts to open.

The suction circuit 40 continues to suction the bottom portion 203 of the bottle container 200 even when the first split mold 11 and the second split mold 12 start to open. For this reason, even immediately after the first split mold 11 and the second split mold 12 start to open, the posture of the bottle container 200 is not disturbed, and the posture shown in Fig. 1, that is, the posture in which the center line 300 of the bottle container 200 is not changed is maintained.

A suction force of the suction circuit 40 may be a suction force that can maintain the posture of the bottle container 200 when the first split mold 11 and the second split mold 12 start to open, and a suction force sufficient to support the weight of the bottle container 200 is not required. For this reason, even in a state where the suction circuit 40 continues the suctioning after the first split mold 11 and the second split mold 12 start to open, the bottle container 200 can start free-falling due to the weight thereof. Specifically, the bottle container 200 can start free-falling in a direction from a front side toward a back side, perpendicular to the paper surface in Fig. 3B.

Next, the suction circuit 40 stops the suctioning from the start of mold opening of the first split mold 11 and the second split mold 12 to the completion of the mold opening (S16). There is a case where the suction force of the suction circuit 40 is strong, a pressure in the suction pipe 44 does not immediately rise only by stopping the suctioning, and the bottle container 200 does not easily start free-falling. As a modification example, a circuit for feeding air into the suction pipe 44 may be connected, and the pressure in the suction pipe 44 may be raised by feeding a gas from the circuit into the suction pipe 44 for a short time after the suctioning by the suction circuit 40 is stopped.

As described above, as the suction circuit 40 attaches the bottle container 200 to the bottom mold 13, even immediately after the first split mold 11 and the second split mold 12 start to open, the posture of the bottle container 200 other than in the up-down direction (gravity direction) is maintained. Accordingly, the bottle container 200 starts free-falling in a stable state where inclining of the center line 300 to the third side or the fourth side in the second direction is suppressed. As a result, generation of a scratch in the bottle container 200 caused by contact with the split molds 11 and 12 is suppressed.

In a case where suctioning is not performed when the first split mold 11 and the second split mold 12 start to open, a force (hereinafter, called a "mold release force") with which the first split mold 11 and the second split mold 12 pull the bottle container 200 is applied in response to the start of the mold opening of the first split mold 11 and the second split mold 12. The bottle container 200 is affected by the mold release force and is disturbed in posture in some cases. In addition, when the first split mold 11 and the second split mold 12 are opened, the bottle container 200 is slightly caught on the first split mold 11 or the second split mold 12 and is disturbed in posture in some cases. Further, the posture of the bottle container 200 is disturbed in some cases by a slight vibration generated by the operation of mold opening of the first split mold 11 and the second split mold 12. In any case, the posture of the bottle container 200 is disturbed in some cases. In this case, there is a possibility in which the bottle container 200 is scratched by coming into contact with the split molds 11 and 12.

The operation in Fig. 2 is merely an example, and for example, other steps may be added, the order of the steps may be changed, or some steps may be executed in parallel. For example, the order of S10 and S12 may be reversed. That is, the mold opening between the movable mold 10 and the intermediate mold 20 may be started before the suction circuit 40 starts the suctioning.

Due to an injection molding defect, a hole is formed in a stage of a preform which is an intermediate molding product, or a hole is formed in a molding product in the blow molding. Alternatively, a hole is formed in the molding product in the blow molding in some cases due to a blow molding defect. In any case, as shown in Fig. 1, a hole 200a can be formed in the bottle container 200, which is a final molding product. In a case where the bottle container 200 has a hole, there is a possibility in which a high-pressure gas blown into the molding product by the blow circuit in the blow molding enters the suction circuit 40, the limit of the withstanding pressure of the suction circuit 40 is exceeded, and the suction circuit 40 is damaged. Specifically, there is a possibility in which the suction pump 42 is damaged, or there is a possibility in which the suction pipe 44 is damaged.

Therefore, as shown in Fig. 1, the blow molding mechanism 1 of the embodiment includes the suppression unit 50 that suppresses the pressure in the suction circuit 40 to the predetermined first threshold pressure or lower.

The first threshold pressure may be determined based on a withstanding pressure of the suction pump 42. For example, the first threshold pressure may be a pressure obtained by multiplying the withstanding pressure of the suction pump 42 by a safety factor (for example, 0.8). The first threshold pressure may be determined based on a withstanding pressure of the suction pipe 44. For example, the first threshold pressure may be a pressure obtained by multiplying the withstanding pressure of the suction pipe 44 by the safety factor (for example, 0.8). Alternatively, the first threshold pressure may be a pressure obtained by multiplying a pressure of any lower one of the withstanding pressure of the suction pump 42 and the withstanding pressure of the suction pipe 44 by the safety factor (for example, 0.8).

The suppression unit 50 includes a branch pipe 52 that branches from the suction pipe 44 and a valve 54 provided in the branch pipe 52 in the present embodiment. The branch pipe 52 is open to the atmosphere, although not limited thereto.

The valve 54 is a valve that is opened when a pressure in a flow path of the branch pipe 52 on a suction circuit 40 side is equal to or higher than the predetermined second threshold pressure. The second threshold pressure is equal to or lower than the first threshold pressure. When a high-pressure gas blown into a molding product by the blow circuit 30 enters the suction circuit 40 since the bottle container 200 has the hole, and a pressure in a flow path of the suction pipe 44 or the flow path of the branch pipe 52 on the suction circuit 40 side is equal to or higher than the second threshold pressure, the valve 54 is opened, and the high-pressure gas flows in the branch pipe 52 and is exhausted to the atmosphere. Accordingly, the pressure in the suction circuit 40 is maintained at the second threshold pressure or lower and at the first threshold pressure or lower, and damage to the suction circuit 40 is suppressed.

Since the valve 54 is a valve that opens when the second threshold pressure or higher is reached, in a strict sense, there is a possibility in which a pressure in the suction circuit 40 slightly exceeds the second threshold pressure momentarily until the valve 54 is opened and a high-pressure gas flows in the branch pipe 52 to be exhausted to the atmosphere. Therefore, it is more preferable that the second threshold pressure is lower than the first threshold pressure. In this case, the pressure in the suction circuit 40 can be more reliably suppressed to the first threshold pressure or lower.

The valve 54 is preferably a valve in which a gas flows only in a direction from a branch portion 60 side between the suction pipe 44 and the branch pipe 52 toward an atmospheric opening side.

In the branch pipe 52, a sectional area of a flow path 54a on a side opposite to the suction circuit 40 (that is, the atmospheric opening side) with respect to the valve 54 is preferably wider than a sectional area of a flow path 54b on the suction circuit 40 side. The sectional area of the flow path 54a is wider than the sectional area of the flow path 54b means that an average sectional area of the flow path 54a is wider than an average sectional area of the flow path 54b. More preferably, a minimum sectional area of the flow path 54a is wider than a minimum sectional area of the flow path 54b. In this case, since a high-pressure gas is likely to flow to the atmospheric opening side, a pressure in the suction circuit 40 can be more reliably suppressed to the first threshold pressure or lower.

The branch pipe 52 preferably has a flow path resistance lower than that of the suction pipe 44. In this case, since a high-pressure gas is likely to flow to the atmospheric opening side, a pressure in the suction circuit 40 can be more reliably suppressed to the first threshold pressure or lower. Specifically, the branch pipe 52 and the suction pipe 44 are preferably configured to satisfy at least one of (1) to (3) below.
(1) The sectional areas of the flow paths 54a and 54b of the branch pipe 52 are wider than a sectional area of a flow path 44a of the suction pipe 44. The sectional areas of the flow paths 54a and 54b are wider than the sectional area of the flow path 44a means that the average sectional areas of the flow paths 54a and 54b are wider than the average sectional area of the flow path 44a. The minimum sectional areas of the flow paths 54a and 54b are preferably wider than the minimum sectional area of the flow path 44a.
(2) The branch pipe 52 is shorter than a portion of the suction pipe 44 from a branch portion 60 to the suction pump 42. That is, a length L1 of the branch pipe 52 is shorter than a length L2 of the portion of the suction pipe 44 from the branch portion 60 to the suction pump 42.
(3) In a periphery of the branch portion 60, an angle α formed by a flow direction D1 in the suction pipe 44 on a movable mold 10 side of the branch portion 60 and a flow direction D2 in the branch pipe 52 is larger than an angle β formed by the flow direction D1 and a flow direction D3 in the suction pipe 44 on a suction pump 42 side of the branch portion 60. For example, in the present embodiment, since a portion of the suction pipe 44 on the movable mold 10 side of the branch portion 60 and the branch pipe 52 extend in a straight line, the angle α is 180 degrees, the angle β is almost 90 degrees, and therefore the angle α may be larger than the angle β.

According to the present embodiment described above, as the blow molding mechanism 1 includes the suppression unit 50, a pressure in the suction circuit 40 is suppressed to the first threshold pressure or lower, and damage to the suction circuit 40 in a case where the bottle container 200, which is a final molding product, has a hole is suppressed.

The present disclosure has been described hereinbefore based on the embodiment. The embodiment is an example. It is clear for those skilled in the art that various modification examples are possible for a combination of each component and each processing process, and such modification examples are also within the scope of the present disclosure.

### (Modification Example 1)

The suppression unit 50 may suppress a pressure in the suction circuit 40 to the first threshold pressure or lower and is not limited to the configuration of the embodiment. The suppression unit 50 may include, for example, the branch pipe 52 and a shutter provided in a portion of the suction pipe 44 on the suction pump 42 side of the branch portion 60. The shutter may block a flow path at the portion of the suction pipe 44 when a pressure in a flow path of the suction pipe 44 is the first threshold pressure or higher.

### (Modification Example 2)

The blow molding mechanism 1 of the embodiment is premised on being applied to a device that performs injection blow molding in two stages of injection molding and blow molding, but the blow molding mechanism 1 can also be applied to a device that performs only blow molding.

### (Modification Example 3)

In the embodiment, the suction circuit 40 starts suctioning before the first split mold 11 and the second split mold 12 are opened, but is not limited thereto. Since the posture of the bottle container 200 may be maintained by using any method when the first split mold 11 and the second split mold 12 are opened, the suction circuit 40 may start suctioning after the first split mold 11 and the second split mold 12 are opened. In this case, examples of the method of maintaining the posture of the bottle container 200 include a method in which another suction circuit (not shown) other than the suction circuit 40 suctions a part of the bottle container 200 and a method in which the first split mold 11, the second split mold 12, or the other members maintain the posture of the bottle container 200.

Any combination of the embodiment and the modification examples described above is also useful as an embodiment of the present disclosure. A new embodiment generated by combination has each of the effects of the combined embodiment and the modification examples.

### Brief Description of the Reference Symbols

1 blow molding mechanism
10 movable mold
20 intermediate mold
40 suction circuit
42 suction pump
44 suction pipe
50 suppression unit
52 branch pipe
54 valve

## Claims

1. A blow molding mechanism (1) that molds a final molding product by blowing a gas into an intermediate molding product held by a mold (10), the blow molding mechanism (1) comprising:
a suction circuit (40) that suctions the final molding product to attach the final molding product to the mold (10); and
a suppression unit (50) that suppresses a pressure in the suction circuit (40) to a predetermined value or lower.

2. A blow molding mechanism (1) that molds a final molding product by blowing a gas into an intermediate molding product held by a mold (10), the blow molding mechanism (1) comprising:
a suction pump (42) that suctions the final molding product to attach the final molding product to the mold (10);
a suction pipe (44) that causes the suction pump (42) and the mold (10) to communicate with each other;
a branch pipe (52) that branches from the suction pipe (44); and
a valve (54) that is provided in the branch pipe (52) and that opens when a predetermined pressure or higher is reached.

3. The blow molding mechanism (1) according to claim 2,
wherein in the branch pipe (52), a sectional area of a flow path (54a) on a side opposite to a branch portion (60) between the suction pipe (44) and the branch pipe (52) with respect to the valve (54) is wider than a sectional area of a flow path (54b) on a branch portion (60) side.

4. The blow molding mechanism (1) according to claim 2,
wherein the branch pipe (52) has a flow path resistance lower than a flow path resistance of the suction pipe (44).

5. The blow molding mechanism (1) according to claim 2,
wherein a sectional area of a flow path (54a, 54b) of the branch pipe (52) is wider than a sectional area of a flow path (44a) of the suction pipe (44).

6. The blow molding mechanism (1) according to claim 2,
wherein the branch pipe (52) is shorter than a portion of the suction pipe (44) from the branch portion (60) to the suction pump (42).

7. The blow molding mechanism (1) according to claim 2,
wherein in a periphery of a branch portion (60), an angle (α) formed by a flow direction (D1) of the suction pipe (44) on a mold (10) side of the branch portion (60) and a flow direction (D2) of the branch pipe (52) is larger than an angle (β) formed by the flow direction (D1) of the suction pipe (44) on the mold (10) side of the branch portion (60) and a flow direction (D3) of the suction pipe (44) on a suction pump (42) side of the branch portion (60).
